Europäisches Patentamt

(19) European Patent Office

Office européen des brevets

(11) Numéro de publication: **0 266 290**
**B1**

(12) **FASCICULE DE BREVET EUROPEEN**

(45) Date de publication du fascicule du brevet:
**19.09.90**

(21) Numéro de dépôt: **87440052.6**

(22) Date de dépôt: **09.09.87**

(51) Int. Cl.⁵: **B26D 7/06,** B21D 43/13,
B23Q 7/04

(54) Procédé et dispositif d'alimentation d'une coupeuse.

(30) Priorité: **30.09.86 FR 8613784**

(43) Date de publication de la demande:
**04.05.88 Bulletin 88/18**

(45) Mention de la délivrance du brevet:
**19.09.90 Bulletin 90/38**

(84) Etats contractants désignés:
**AT BE CH DE ES FR GB GR IT LI LU NL SE**

(56) Documents cités:
**DE-A- 2 646 465**
**GB-A- 845 316**
**US-A- 2 144 335**
**US-A- 2 529 777**
**US-A- 3 261 246**

(73) Titulaire: **EBERLE FRANCE, S.A., 2 avenue de l'Energie,
F-67800 Bischheim(FR)**

(72) Inventeur: **Eberle, Jean-Marie, 3 rue de la Colline,
F-67200 Oberhausbergen(FR)**

(74) Mandataire: **Nuss, Pierre, 10, rue Jacques Kablé,
F-67000 Strasbourg(FR)**

## Description

La présente invention concerne la coupe de tubes en différents tronçons, et a pour objet un procédé permettant l'avance automatique du chariot d'une coupeuse de tubes.

On sait que la fabrication de tubes en papier, carton ou matière synthétique, s'effectue selon différentes étapes et à l'aide de différentes machines, notamment des encolleuses et des spiraleuses. Lorsque la fabrication d'un tube est terminée, il reste encore à le couper en différents tronçons ou rondelles de longueur déterminée, à l'aide d'une recoupeuse de tubes à un ou plusieurs couteaux.

De telles recoupeuses sont connues. A titre d'exemple, une recoupeuse pourra présenter les organes suivants :
- un bâti mécano-soudé ;
- une tête sur laquelle est fixé un arbre lié ou libre en rotation ;
- un chariot comprenant un mandrin ;
- un module de coupe monté libre ou lié en rotation sur l'arbre, ledit module de coupe étant interchangeable selon le diamètre du tube, et présentant une fixation permettant le changement de tube;
- un module du pousseur, entraîné en rotation par le mandrin et interchangeable selon le diamètre du tube, et présentant également une fixation permettant le changement de tube ;
- un pousseur ou mandrin entraîné en rotation à grande vitesse, serrant le tube sur le module du pousseur ;
- des contre-rouleaux supportant le tube à couper ;
- un ensemble présentant un ou plusieurs couteaux libres en rotation ou entraînés par un moteur, le ou les couteaux étant montés chacun sur un porte-couteau, et la plongée de chaque couteau étant commandée par un vérin pneumatique ;
- un tableau de commande.

Le fonctionnement d'une telle machine est le suivant :
- engagement préalable d'un tube ;
- introduction du tube à couper ;
- serrage du tube à couper sur le mandrin du chariot;
- avance du chariot et ainsi du module du pousseur,jusqu'à ce que le tube à couper soit en position de début de cycle ;
- plongée, coupe et retrait du couteau ;
- avance du module du pousseur de la longueur de coupe désirée, ce qui dégage le premier tronçon coupé ;
- poursuite des opérations jusqu'au dernier tronçon coupé ;
- dégagement de la chute d'extrémité du tube.

Actuellement, l'ensemble de ces opérations ont lieu soit manuellement, soit entièrement automatiquement. Dans le premier cas, l'avance du chariot s'effectue manuellement jusqu'à une butée réglable selon la longueur du tronçon du tube à couper. Chaque fois qu'un tronçon de tube est coupé, l'opérateur pousse le tube jusqu'à ce qu'il appuie contre la butée. Cette opération est à répéter continuellement pour chaque tronçon à couper. De plus, il est impossible d'obtenir un tronçon de très faible largeur, du fait de la propre largeur de la buté, d'une part,et de celle du porte-couteau, d'autre part. En effet, lors du rapprochement de la butée vers le porte-couteau, ces deux éléments entrent en contact et il n'est alors plus possible de les rapprocher davantage. Il est, par conséquent, impossible de couper un tube en des rondelles ou des bagues sur ce type de coupeuse. On a alors réalisé des coupeuses où l'ensemble des mouvements est assuré automatiquement par des moteurs à courant continu associés à des variateurs électroniques ou des moteurs asynchrones associés à des variateurs de fréquence. L'avance du chariot est réalisée par une vis à billes ou un ensemble pignon-crémaillère, l'avance étant fonction de la longueur de coupe (voir par exemple le document US-A 2 144 335). La synchronisation des différents paramètres est alors réalisée par un automate programmable, la programmation des longueurs de coupe s'effectuant par l'intermédiaire d'une commande numérique à un axe. Mais ce type de coupeuse présente l'inconvénient d'être sophistiquée, donc coûteuse. Elles ne sont donc pas forcément adaptées à des petites ou des moyennes productions.

La présente invention a pour but de pallier ces inconvénients.

Elle a, en effet, pour objet un procédé d'avance automatique d'un chariot d'une coupeuse de tubes situés sur un module du pousseur du chariot et sur un module de coupe montés sur un arbre entraîné en rotation ou fixe, caractérisé en ce qu'il consiste à réaliser l'avance automatique du chariot par bridage et débridage de ce dernier à l'aide de moyens de bridage sur une barre mobile, grâce à un moyen de translation, et sur une barre fixe,montées sur la coupeuse, la longueur des portions d'un tube à couper étant réglée grâce à un moyen de réglage, préalablement au premier bridage du chariot sur la barre mobile.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue de face d'une coupeuse munie d'un dispositif d'avance conforme à l'invention ;

la figure 2 est une vue du schéma de principe du fonctionnement du dispositif conforme à l'invention ;

la figure 3 est une vue en plan et en coupe, du moyen de réglage du dispositif d'avance conforme à l'invention ;

la figure 4 est une vue de face et en coupe, de la liaison du moyen de translation à la barre mobile du dispositif d'avance conforme à l'invention ;

la figure 5 est une vue de face et en coupe, du chariot du moyen de réglage conforme à l'invention en position de butée arrière ;

la figure 6 est une vue de face des moyens de bridage du dispositif d'avance conforme à l'invention ;

la figure 7 est une vue en plan, selon A-A de la figure 6, des moyens de bridage du dispositif d'avance conforme à l'invention ;

la figure 8 est une vue, en coupe, selon B-B de la figure 6, des moyens de bridage du dispositif d'avance conforme à l'invention ;

la figure 9 est une vue de face du mandrin du chariot mû par le dispositif d'avance conforme à l'invention, et

la figure 10 est une vue en coupe selon C-C de la figure 9, du mandrin du chariot mû par le dispositif d'avance conforme à l'invention.

Conformément à l'invention, le procédé d'avance automatique du chariot 1 d'une coupeuse de tubes 3, consiste à réaliser l'avance automatique du chariot 1 par bridage et débridage de ce dernier à l'aide de moyens de bridage 11 sur une barre mobile 6, grâce à un moyen de translation 10, et sur une barre fixe 7, montées sur la coupeuse, la longueur des portions d'un tube 3 à couper étant réglée grâce à un moyen de réglage 8, préalablement au premier bridage du chariot 1 sur la barre mobile 6.

Pour ce faire, le déroulement des opérations consiste, successivement, à brider le chariot 1 sur une barre mobile 6, à translater la barre 6, et ainsi le chariot 1, en direction du module de coupe 5, d'une longueur égale à celle des portions de tube 3 à couper, à brider le chariot 1 sur une barre fixe 7, à débrider le chariot 1 de la barre mobile 6 simultanément à la coupe de la première portion de tube 3 à couper, à translater la barre 6 mobile en sens inverse du module de coupe 5, de la longueur égale à celle des portions de tube 3 à couper afin de la remettre dans sa position initiale, à rebrider le chariot 1 sur la barre mobile 6 lorsque la première coupe est terminée, à débrider le chariot 1 de la barre fixe 7, à poursuivre les opérations jusqu'à la coupe de la dernière portion de tube 3 à couper, à translater la barre mobile 6 en sens inverse du module de coupe 5, de la longueur égale à celle des portions de tube 3 coupées, afin de la remettre dans sa position initiale, et à débrider le chariot 1 de la barre fixe 7.

Ce procédé permet, par conséquent, une avance automatique du chariot 1 de la longueur de coupe désirée pour tous les tronçons d'un même tube 3 à couper, sans intervention manuelle de l'opérateur et sans le contrôle d'une commande numérique et d'un automate programmable. En outre, toutes les longueurs de coupe des tubes 3 sont possibles, même celles permettant d'obtenir des rondelles ou des bagues.

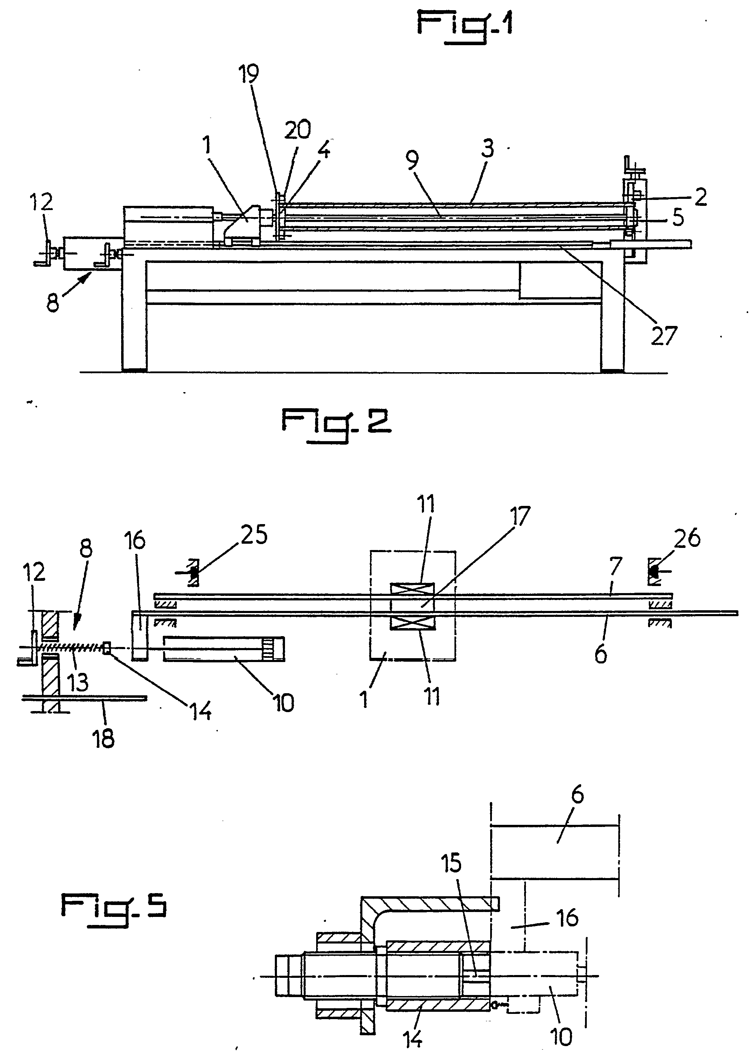

L'invention a également pour objet un dispositif pour la mise en oeuvre du procédé, ledit dispositif étant principalement constitué par une barre horizontale 7, parallèle aux deux axes de guidage 27 du chariot 1, et fixée de manière rigide au châssis mécano-soudé de la coupeuse, et par une barre horizontale 6, parallèle à la barre 7, et mobile en translation grâce à un moyen de translation 10, la longueur de translation pouvant être réglée grâce au moyen de réglage 8 et le chariot 1 pouvant être bridé aux barres 6 et 7 par l'intermédiaire de moyens de bridage 11 (figures 1 et 2).

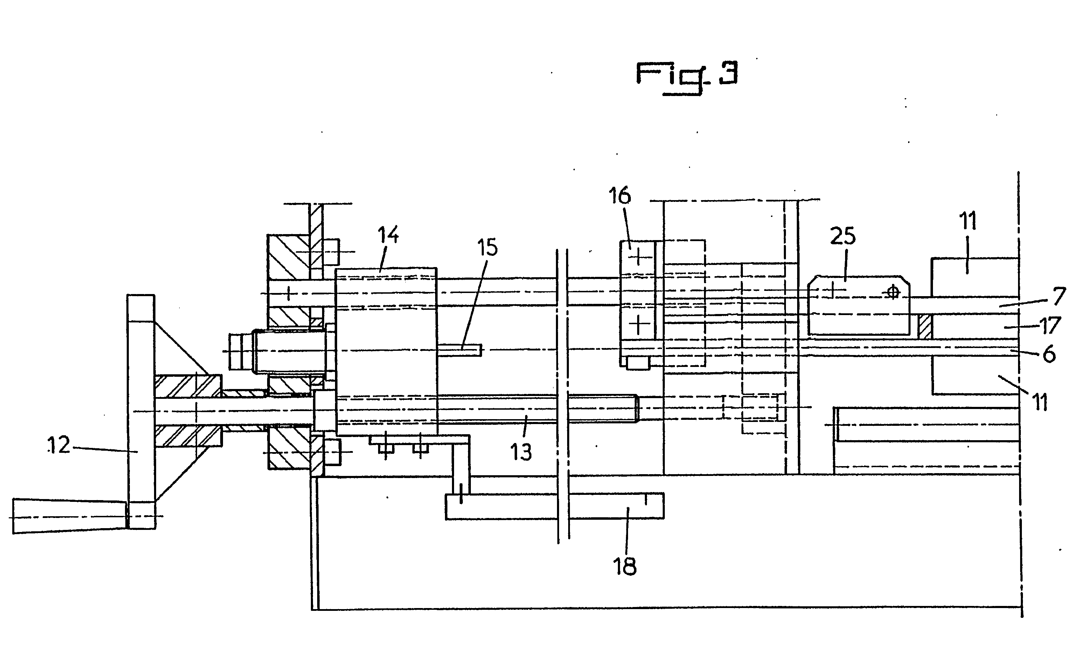

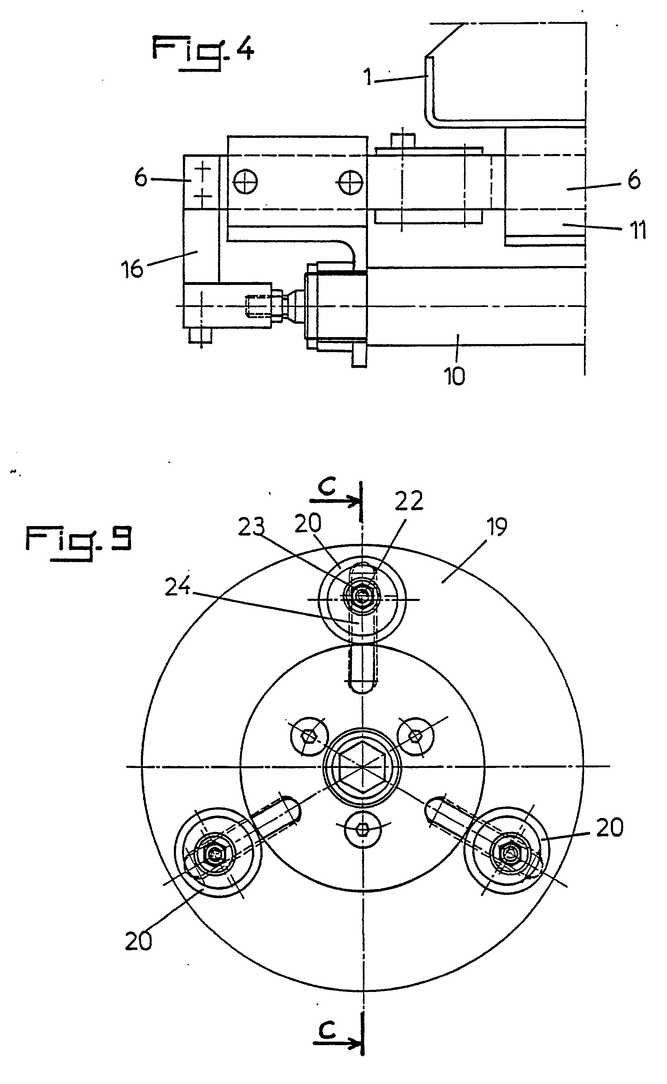

Selon une caractéristique de l'invention, et comme le montrent les figures 3 à 5, le moyen de réglage 8 est sous la forme d'une manivelle 12 reliée à une vis 13 dont la rotation commande la translation d'un chariot 14, muni d'un amortisseur hydraulique 15, sur la barre fixe 7, et contre lequel vient appuyer soit la barre mobile 6, soit un élément de liaison 16 disposé entre la barre mobile 6 et le moyen de translation 10, sous la forme d'un vérin, le moyen de réglage 8 comprenant également une règle graduée 18 permettant de sélectionner la longueur de coupe désirée.

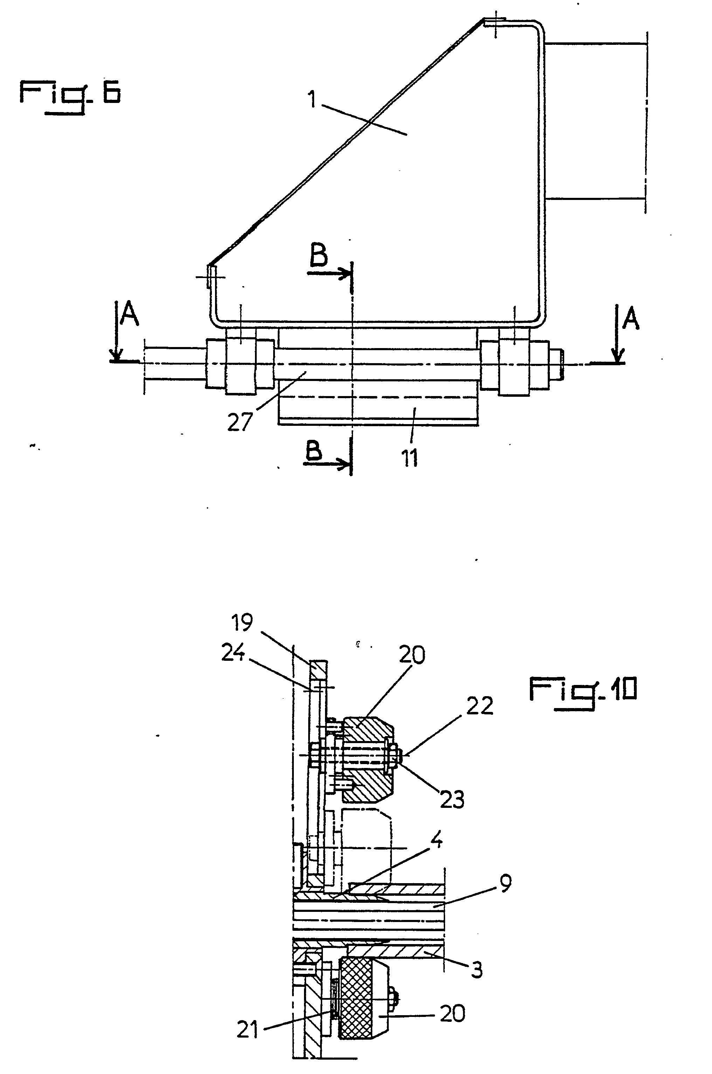

Selon une autre caractéristique de l'invention, et comme le montrent les figures 6 à 8, le chariot 1 est muni de deux moyens de bridage 11 sous la forme de vérins de blocage mécaniques ou pneumatiques, tels que des vérins à membranes, l'actionnement de l'un des deux vérins rendant une barre fixe 17 du chariot 1 solidaire de la barre fixe 7, et l'actionnement de l'autre le rendant solidaire de la barre mobile 6, la barre fixe 17 étant disposée entre les deux moyens de bridage 11, eux-mêmes disposés entre les deux axes de guidage 27 du chariot 1. Le mandrin 19 du chariot 1 est muni d'un moyen de fixation du tube 3 à couper, sous la forme de galets de serrage 20, chacun étant monté libre en rotation sur un ressort 21 et sur un axe 22 disposé de manière excentrique par rapport à l'axe de symétrie du galet 20. Les galets de serrage 20 pourront être avantageusement au nombre de trois, et disposés sur le mandrin 19 du chariot 1 et écartés de 120° l'un par rapport à l'autre (figure 9). Ils sont rugueux pour accentuer le frottement sur le tube 3. Chaque galet 20 est fixé par un boulon excentrique 23 dans une rainure 24 du mandrin 19 et peut coulisser dans ladite rainure 24 (figure 10).

Le fonctionnement du dispsotif d'avance automatique est le suivant :

En premier lieu, l'opérateur règle la longueur de coupe de chaque tronçon du tube 1 à couper. Pour ce faire, il déplace le chariot 14 à l'aide de la manivelle 12, la lecture directe sur la règle graduée 18 lui permettant la sélection de la longueur choisie. Le chariot 14 translate sur la barre fixe 7 à l'aide de la vis 13, la face du chariot 14 où se trouve l'amortisseur hydraulique 15 faisant office de butée de la barre mobile 6 (figures 3 à 5). La longueur de coupe pourra être aussi faible que souhaitée, puisque le porte-couteau ne pourra jamais entrer en contact avec le chariot 14 et l'amortisseur hydraulique 15 faisant office de butée. C'est pourquoi, il est possible de couper un tube 3 en rondelles ou bagues. Puis l'opérateur engage le tube à couper sur le module de coupe 5, puis sur le module du pousseur 4, ce qui amène ce dernier, ainsi que le chariot 1, contre une butée arrière 25, en position arrière la plus éloignée du module de coupe 5 et du couteau 2. Une fois le tube introduit sur le module du pousseur 4, l'opérateur règle la position des galets de serrage 20 en les coulissant dans les rainures 24, de manière à les ramener en contact avec le tube 3, serre les boulons 23 afin de les maintenir fixes dans les rainures 24, puis tourne manuellement le tube 3 d'en viron un quart à un demi-tour, ce qui fait également tourner les galets 20 d'un quart à un demi-tour, du fait de leur rugosité, et augmente ainsi le serrage du tube 3, les galets 20 étant montés de façon excentrique sur leur axe 22 (figures 9 et 10). Lors de la rotation du mandrin 19 à haute vitesse, la force centrifuge maintient les galets 20 en position de serrage. Les ressorts 21 sont dimensionnés de manière suffisante pour permettre le maintien des galets 20 en position ouverte lorsque le tube n'est pas encore introduit, mais insuffisante pour les réouvrir une fois que l'opérateur les a mis en position de serrage, par rotation d'environ un quart à un demi-tour du tube 3, le frottement du tube 3 sur chaque galet 20 étant supérieur.

Ensuite, l'opérateur met en marche un moteur, à courant alternatif, entraînant en rotation le tube 3.

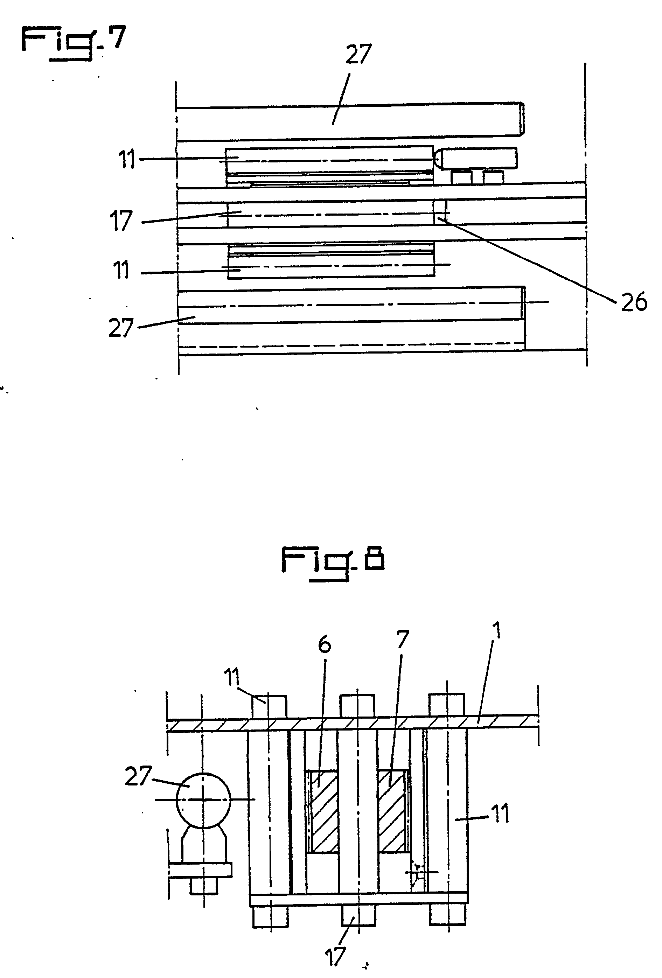

Le chariot 1 est automatiquement bridé sur la barre mobile 6 qui translate alors, par actionnement du vérin 10, en direction du module de coupe 5 jusqu'à ce que le vérin 10 soit rentré. Puis le chariot 1 est bridé sur la barre fixe 7 et la plongée du couteau 2 est déclenchée, soit pneumatiquement, soit mécaniquement. Le chariot 1 est, simultanément à la coupe, débridé de la barre mobile 6 et celle-ci revient par actionnement du vérin 10 jusqu'à ce que l'élément de liaison 16 entre en contact avec l'amortisseur 15 du chariot 14, en fonction de la longueur de coupe choisie (figure 5). Enfin, le chariot 1 est à nouveau bridé sur la barre mobile 6 et débridé de la barre fixe 7, et une nouvelle translation de la barre mobile 6 en direction du module de coupe 5 fait avancer le chariot 1 pour une seconde coupe. Le bridage du chariot 1 sur chaque barre 6 ou 7 s'effectue toujours par actionnement d'un vérin 11 qui plaque la barre 6 ou 7 contre l'axe de guidage 27 du chariot 1, les rendant solidaires l'un de l'autre (figures 6 à 8). Lorsque la barre fixe 7 est solidaire de la barre fixe 17, la translation du chariot 1 est, par conséquent, bloquée. Par contre, lorsque la barre mobile 6 est solidaire de la barre fixe 17, le chariot 1 se déplace en translation solidairement à la barre 6. Chaque avance du chariot 1 évacue le tronçon coupé, soit sur un support d'évacuation, soit directement sur le sol.

Les opérations se poursuivent jusqu'à ce que le chariot 1 se trouve contre une butée avant 26.

Le moteur à courant alternatif entraînant en rotation l'arbre 9 est alors stoppé automatiquement ou manuellement par l'opérateur, et la chute du tube 3 se trouvant sur le module du pousseur 4 est évacuée, manuellement ou automatiquement. La coupeuse est alors prête pour une nouvelle introduction d'un tube 3 à couper.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Procédé d'avance automatique d'un chariot (1) d'une coupeuse de tubes (3) situés sur un module du pousseur (4) du chariot (1) et sur un module de coupe (5) montés sur un arbre (9),entraîné en rotation ou fixe , caractérisé en ce qu'il consiste à réaliser l'avance automatique du chariot (1) par bridage et débridage de ce dernier à l'aide de moyens de bridage (11) sur une barre mobile (6) en translation, et sur une barre fixe (7),montées sur la coupeuse, la longueur des portions d'un tube (3) à couper étant réglée grâce à un moyen de réglage (8), préalablement au premier bridage du chariot (1) sur la barre mobile (6).

2. Procédé d'avance selon la revendication 1, caractérisé en ce qu'il consiste,successivement, à brider le chariot (1) sur une barre mobile (6), à translater la barre (6), et ainsi le chariot (1), en direction du module de coupe (5),d'une longueur égale à celle des portions de tube (3) à couper, à brider le chariot (1) sur une barre fixe (7), à débrider le chariot (1) de la barre mobile (6) simultanément à la coupe de la première portion de tube (3) à couper, à translater la barre (6) mobile en sens inverse du module de coupe (5), de la longueur égale à celle des portions de tube (3) à couper afin de la remettre dans sa position initiale, à rebrider le chariot (1) sur la barre mobile (6) lorsque la première coupe est terminée, à débrider le chariot (1) de la barre fixe (7), à poursuivre les opérations jusqu'à la coupe de la dernière portion de tube (3) à couper, à translater la barre mobile (6) en sens inverse du module de coupe (5), de la longueur égale à celle des portions de tube (3) coupées, afin de la remettre dans sa position initiale, et à débrider le chariot (1) de la barre fixe (7).

3. Dispositif d'avance automatique d'un chariot (1) d'une coupeuse de tubes (3) pour la mise en oeuvre du procédé selon l'une quelconque des revendications 1 à 2, caractérisé en ce qu'il est principalement constitué par une barre horizontale (7) parallèle aux deux axes de guidage (27) du chariot (1), et fixée de manière rigide au châssis mécano-soudé de la coupeuse, et par une barre horizontale (6), parallèle à la barre (7), et mobile en translation grâce à un moyen de translation (10), la longueur de translation pouvant être réglée grâce au moyen de réglage (8) et le chariot (1) pouvant être bridé aux barres (6 et 7) par l'intermédiaire de moyens de bridage (11).

4. Dispositif d'avance selon la revendication 3, caractérisé en ce que le moyen de réglage (8) est sous la forme d'une manivelle (12) reliée à une vis (13) dont la rotation commande la translation d'un chariot (14), muni d'un amortisseur hydraulique (15), sur la barre fixe (7) , et contre lequel vient appuyer soit la barre mobile (6), soit un élément de liaison (16) disposé entre la barre mobile (6) et le moyen de translation (10), sous la forme d'un vérin, le moyen de réglage (8) comprenant également une règle graduée (18) permettant de sélectionner la longueur de coupe désirée.

5. Dispositif d'avance selon l'une quelconque des revendications 3 et 4, caractérisé en ce que le chariot (1) est muni de deux moyens de bridage (11) sous la forme de vérins de blocage mécaniques ou pneumatiques, tels que des vérins à membranes, l'actionnement de l'un des deux vérins rendant une barre fixe (17) du chariot (1) solidaire de la barre fixe (7), et l'actionnement de l'autre le rendant solidaire de la barre mobile (6), la barre fixe (17) étant disposée entre les deux moyens de bridage (11), eux-mêmes disposés entre les deux axes de guidage (27) du chariot (1).

6. Dispositif d'avance selon l'une quelconque des revendications 3 à 5, caractérisé en ce que le mandrin (19) du chariot (1) est muni d'un moyen de fixation du tube (3) à couper, sous la forme de galets de serrage (20), chacun étant monté libre en rotation sur un ressort (21) et sur un axe (22) disposé de manière excentrique par rapport à l'axe de symétrie du galet (20).

**Patentansprüche**

1. Verfahren zum automatischen Zuführen eines Wagens (1) an einer Schneidvorrichtung für Rohre (3), die sich an einem Modul der Ausstoßvorrichtung (4) des Wagens (1) und an einem Schneidmodul (5) befinden, die an einer drehenden oder feststehenden Welle (9) montiert sind, dadurch gekennzeichnet, daß es darin besteht, die automatische Zuführung des Wagens (1) durch An- und Abflanschen dieses letzteren mit Hilfe von Flanschmitteln (11) an einer in der Verschiebung beweglichen Stange (6), und an einer stationären Stange (7), die auf der Schneidvorrichtung montiert sind, durchzuführen, wobei die Länge der abzuschneidenden Abschnitte eines Rohrs (3) dank eines Einstellmittels (8) vor dem ersten Anflanschen des Wagens (1) an der beweglichen Stange (6) eingestellt wird.

2. Verfahren zum Zuführen nach Anspruch 1, dadurch gekennzeichnet, daß es darin besteht, nacheinander den Wagen (1) an der beweglichen Stange (6) anzuflanschen, die Stange (6), und damit den Wagen (1) in Richtung des Schneidmoduls (5) um eine Länge gleich der Länge der abzuschneidenden Rohrabschnitte (3) zu verfahren, den Wagen (1) auf einer stationären Stange (7) anzuflanschen, den Wagen von der beweglichen Stange (6) gleichzeitig nach dem Schnitt des ersten, abzuschneidenden Rohrabschnitts (3) abzuflanschen, die bewegliche Stange (6) in umgekehrter Richtung zu dem Schneidmodul um die Länge gleich der Länge der abzuschneidenden Rohrabschnitte (3) zu verfahren, um sie in ihre Ausgangsposition zurückzuführen, den Wagen (1) auf der beweglichen Stange (6) wieder anzuflanschen, wenn der erste Schnitt beendet ist, den Wagen (1) von der stationären Stange (7) abzuflanschen, die Arbeitsgänge bis zum Schnitt des letzten abzuschneidenden Rohrabschnitts (3) fortzusetzen, die bewegliche Stange (6) in umgekehrter Richtung zu dem Schneidmodul (5) um die Länge gleich der Länge der abgeschnittenen Rohrabschnitte (3) zu verfahren, um sie in ihre Ausgangsstellung zurückzuführen, und den Wagen (1) von der stationären Stange (7) abzuflanschen.

3. Vorrichtung zum automatischen Zuführen eines Wagens (1) an einer Schneidvorrichtung für Rohre (3) zur Durchführung des Verfahrens nach Anspruch 1 bis 2, dadurch gekennzeichnet, daß sie hauptsächlich aus einer horizontalen Stange (7), die parallel zu den beiden Führungsachsen (27) des Wagens (1) verläuft und starr auf dem mechanisch geschweißten Rahmen der Schneidvorrichtung befestigt ist, und aus einer horizontalen Stange (6) besteht, die parallel zur Stange (7) verläuft, und in der Verschiebung dank eines Verschiebemittels (10) beweglich ist, wobei die Länge der Verschiebung mit Hilfe eines Einstellmittels (8) eingestellt und der Wagen (1) an den Stangen (6) und (7) mit Hilfe von Flanschmitteln (11) angeflanscht werden kann.

4. Vorrichtung zum Zuführen nach Anspruch 3, dadurch gekennzeichnet, daß das Einstellmittel (8) als ein mit einer Schraube (13) verbundener Hebel (12), ausgeführt ist, deren Drehung die Verschiebung eines mit einer Ölstossdämpfung (15) versehenen Wagens (14) auf der stationären Stange (7) steuert, und gegen den entweder die bewegliche Stange (6) oder ein zwischen der beweglichen Stange (6) und dem Verschiebemittel (10) angeordnetes Verbindungselement (16), in Form eines Zylinders drückt, wobei das Einstellmittel (8) auch einen Meßstab (18) aufweist, mit dem die Länge des gewünschten Schnitts gewählt werden kann

5. Vorrichtung zum Zuführen nach einem der Ansprüche 3 und 4, dadurch gekennzeichnet, dass der Wagen (1) mit zwei Flanschmitteln (11) in Form von mechanischen oder pneumatischen Absperrzylindern, wie Membranzylindern, versehen ist, wobei die Betätigung des einen der beiden Zylinder die stationäre Stange (17) des Wagens (1) mit der stationären Stange (7), und die Betätigung des anderen ihn mit der beweglichen Stange (6) fest verbindet, wobei die stationäre Stange (17) zwischen den beiden Flanschmitteln (11) angeordnet ist, die selbst zwischen den beiden Führungsachsen (27, des Wagens (1) sitzen.

6. Vorrichtung zum Zuführen nach einem der Ansprüche 3 bis 5, dadurch gekennzeichnet, daß das Spannfutter (19) des Wagens (1) mit einem Mittel zur Befestigung des abzuschneidenden Rohrs (3) in Form von Spannrollen (20) ausgestattet ist, wobei jede drehfrei auf einer Feder (21) und auf einer in bezug auf die Symmetrieachse der Rolle (20) exzentrisch angeordneten Achse (22) montiert ist.

**Claims**

1. Method of automatic advance of a carriage (1) of a cutter for tubes (3) located on a module of the pusher (4) of the carriage (1) and on a cutting module (5) which are mounted on a rotatably driven or stationary arbor (9), characterised in that it involves automatically advancing the carriage (1) by clamping and unclamping thereof using clamping means (11) on a rod (6) which is movable in translation and on a stationary rod (7) which are mounted on the cutter, the length of the portions of a tube (3) to be cut being adjusted by adjusting means (8) prior to the first clamping of the carriage (1) on the movable rod (6).

2. Method of advance according to claim 1, characterised in that it involves successively clamping the carriage (1) on a movable rod (6), translating the rod (6) and therefore the carriage (1) in the direction of the cutting module (5) by a length equal to that of the portions of tube (3) to cut, clamping the carriage (1) on a stationary rod (7), unclamping the carriage (1) from the movable rod (6) simultaneously with the cutting of the first portion of tube (3) to be cut, translating the movable rod (6) in the direction opposed to the cutting module (5) by a length equal to that of the portions of tube (3) to be cut in order to replace it in its starting position, re-clamping the carriage (1) on the movable rod (6) when the first cutting operation is completed, unclamping the carriage (1) from the stationary rod (7), continuing the operations until the last portion of tube (3) to be cut is cut, translating the movable rod (6) in the direction opposed to the cutting module (5) by a length equal to that of the cut portions of tube (3) in order to replace it in its starting position, and unclamping the carriage (1) from the stationary rod (7).

3. Device for the automatic advance of a carriage (1) of a cutter of tubes (3) for carrying out the method according to any one of claims 1 to 2, characterised in that it mainly consists of a horizontal rod (7) parallel to the two guide shafts (27) of the carriage (1) and rigidly fixed to the mechanically welded chassis of the cutter and of a horizontal rod (6) parallel to the rod (7) and movable in translation by a translation means (10), wherein the length of translation can be adjusted by the adjusting means (8) and the carriage (1) can be clamped to the rods (6 and 7) via clamping means (11).

4. Advance device according to claim 3, characterised in that the adjusting means (8) is in the form of a crank (12) connected to a screw (13) of which the rotation controls the translation of a carriage (14) equipped with a hydraulic damper (15) on the stationary rod (7) and against which either the movable rod (6) or a connecting element (16) arranged between the movable rod (6) and the translation means (10) in the form of a jack will rest, the adjusting means (8) also comprising a graduated ruler (18) allowing the desired cutting length to be selected.

5. Advance device according to any one of claims 3 and 4, characterised in that the carriage (1) is equipped with two clamping means (11) in the form of mechanical or pneumatic locking jacks such as diaphragm jacks, the actuation of one of the two jacks rendering a stationary rod (17) of the carriage (1) integral with the stationary rod (7) and the actuation of the other rendering it integral with the movable rod (6), the stationary rod (17) being arranged between the two clamping means (11) which are in turn arranged between the two guide shafts (27) of the carriage (1).

6. Advance device according to any one of claims 3 to 5, characterised in that the chuck (19) of the carriage (1) is equipped with a means for fixing the tube (3) to be cut, in the form of gripping rollers (20), each mounted freely rotatably on a spring (21) and on an axis (22) arranged eccentrically relative to the axis of symmetry of the roller (20).

Fig.1

Fig.2

Fig.5

# Fig.3

EP 0 266 290 B1

**Fig.4**

1

6

6

11

16

10

**Fig.9**

C

23 20 22

24

19

20

20

20

C

Fig.7

Fig.8

**Fig. 6**

**Fig. 10**